(19) **Europäisches Patentamt / European Patent Office / Office européen des brevets**

(11) **EP 4 748 790 A1**

(12) **EUROPEAN PATENT APPLICATION**

(43) Date of publication:
27.05.2026 Bulletin 2026/22

(21) Application number: 24214904.5

(22) Date of filing: 22.11.2024

(51) International Patent Classification (IPC):
*C01B 32/205* (2017.01)    *C01B 32/21* (2017.01)

(52) Cooperative Patent Classification (CPC):
(C-Sets available)
**C01B 32/21; C01B 32/205; C08K 3/04;**
C01P 2004/61; C01P 2006/10; C01P 2006/11;
C01P 2006/12; C01P 2006/19; C08K 2201/005;
C08K 2201/006    (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Imerys Graphite & Carbon Switzerland Ltd.**
**6743 Bodio (CH)**

(72) Inventors:
• **Rauscher, Frank**
**6500 Bellinzona (CH)**
• **Gulás , Michal**
**6713 Malvaglia (CH)**
• **Gilardi, Raffaele**
**6500 Bellinzona (CH)**
• **Juri, Giovanni**
**6775 Ambrì (CH)**
• **Ostinelli, Luca**
**Alzate Brianza (IT)**

(74) Representative: **Eder, Michael**
**df-mp Patentanwälte Rechtsanwälte PartG mbB**
**Theatinerstraße 16**
**80333 München (DE)**

(54) **SYNTHETIC GRAPHITE FROM RENEWABLE FEEDSTOCK**

(57)    The invention relates to synthetic graphite particulate materials with an advantageous combination of physical properties, which may be produced from renewable feedstock and which are characterized by, *e.g.* a xylene density of at least about 2.11 g/cm$^3$, a spring-back value of at least about 25%, and a Scott density (also referred herein as apparent density or bulk density) of below about 0.20 g/cm$^3$.

EP 4 748 790 A1

(52) Cooperative Patent Classification (CPC): (Cont.)

C-Sets
**C08K 3/04, C08L 61/06**

**Description**

**Technical Field**

The invention relates to a synthetic graphite particulate material with an advantageous combination of physical properties and characteristics. The synthetic graphite particulate material according to the invention is characterized by *e.g.* a xylene density of at least about 2.11 g/cm$^3$, a spring-back value of at least about 25%, and a Scott density (also referred herein as apparent density or bulk density) of below about 0.20 g/cm$^3$ and can be produced from renewable feedstock.

**Technological Background**

The term graphite describes the crystalline form of sp$^2$-hybridized carbon structures and consists of stacked layers of graphene, which is a 2-D sheet of fused hexagonal carbon rings forming an expansive and continuous conjugated aromatic system. Graphite can be obtained from *inter alia* natural sources, such as various ores and can also be obtained synthetically by various processes. For example, graphitizing non-graphitic (amorphous) carbon, chemical vapor deposition from hydrocarbons at temperatures generally exceeding 2,500 K (2,230 °C), or decomposing thermally unstable carbides are suitable to yield synthetic graphites. (See Carbon, Volume 208, May 2023, Pages 443-451; Activated Carbon 2006, Pages 454-508, 2006 Elsevier Ltd; Pierson, Hugh 0. Handbook of carbon, graphite, diamond, and fullerenes : properties, processing, and applications, 1993 Noyes Publications) However, both these sources of graphite are in the end based on finite natural resources, either in the form of ore deposits or in the form of fossil fuels. Exemplary commercially available synthetic graphites include TIMREX $^®$ KS 75 graphite, TIMREX $^®$ KS 5-75TT, and TIMREX $^®$ T 75.

Graphite and graphite-like materials play a crucial role in numerous industrial applications, ranging anywhere from electrical applications (e.g. as conductive additive in alkali metal batteries or carbon brushes), thermal applications (e.g. as thermally conductive additive), lubricants, powder metallurgy, and frictional applications (e.g. as additive to brake pads). Graphites for industrial use are generally characterized by several physical parameters that correlate to unique and valuable properties for various industrial applications, such as density, aromaticity, its crystal structure, compatibility, electrical conductivity, thermal conductivity, and porosity.

Currently, the synthesis of graphites generally relies on fossil fuel or other non-renewable resources. This dependency poses significant environmental and economic challenges, including high carbon emissions and the depletion of finite natural resources. Consequently, there is an acute need in the industry to explore and develop sustainable alternatives for naturally mined graphite and synthetic graphite production from finite resources.

One promising avenue is the utilization of renewable feedstocks for the synthesis of graphite or graphite-like materials. Renewable feedstocks, generally derived from biomass such as agricultural residues, agricultural waste, forestry byproducts (e.g. sawdust), forestry residues (such as wood chips), wood industry by-products and other types of biological waste products, lignin, biochars, and algae offer a sustainable pathway for accessing promising graphite materials. Additionally, such renewable feedstocks are not only abundant and inexpensive, but also have a reduced environmental footprint as the carbon source is atmospheric $CO_2$.

As is generally appreciated in the art, renewable feedstocks can be charred by an initial pyrolysis step - a thermal decomposition process carried out in the absence of oxygen - to yield a substance generally termed as "biochar", which is a carbon-rich mixture of mostly amorphous solid materials. Subsequently, such bio-chars can then be subjected to additional thermal and chemical activation steps to enhance its graphitic structure and tailor its physical properties towards specific applications. Such approaches align with the global need for sustainable technologies and pave the way for greener and more efficient graphite-based technologies.

In the last decade various studies were performed in order to obtain graphite from biomass and this research is put in more spotlight recently since graphite classification as critical mineral in US and EU. Banek et al (Scientific Reports | (2022) 12:8080) and Banek et al (ACS Sustainable Chem. Eng. 2018, 6, 13199-13207) each show the synthesis of graphite and non graphitised carbons for mobile energy applications from hardwood sawdust and cellulose spheroids using irradiation with diode and $CO_2$ laser. Shi et al (SusMat. 2023;3:402-415) mentioned also other than Li-ion anode material applications for green graphite, namely inks and pencil leads. Furthermore WO2016130026A1 and KR20170117454 describe graphite production from biomass, its apparatus and catalyst used. All these preparation methods have in common use of a catalyst and/or irradiation and therefore require a purification step. Purification is usually done by acid washing using $HNO_3$ and HCl. Since Iron based catalysts are mainly used, the purification is critical especially for applications like Li-ion or fuel cell batteries where extremely high purity carbon based materials are required.

Yap and coworkers (Materials 2023, 16, 3601) in their review discuss recent advances in production of graphite from lignocelullose based bio materials. It is interesting to note that Yap discusses the advantage of Joule heating process to prepare low cost but high conductivity graphitic carbons citing examples for producing graphitic lignin carbon from reduced graphene oxide-lignin [Jiang et al Carbon Volume 144, April 2019, Pages 241-248] and carbon fibers from bamboo [Geldolf et al]. In WO2024039765A2 renewable feedstocks are used to produce graphite, however they are in liquid form and go through the coking step and the Lc value of their produced graphite is below 100 nm.

In light of the above, there is a clear need for improved and advantageous sustainable synthetic graphite particulate materials with graphite-like characteristics, especially for electrical (e.g. as conductive additive), thermal (e.g. as thermally conductive additive), lubrication, powder metallurgy, and frictional applications (e.g. as additive to brake pads). Such materials would be of special interest in, for example, the electric automobile industry, where composite parts with good electrical properties combined with low weight are of paramount importance. Hence, the present inventors set out to explore sustainable synthetic graphite particulate materials that display advantageous properties when embedded in composite materials on a polymer basis. Advantageously, the synthetic graphite particulate materials should be obtainable from renewable feedstocks and display advantageous properties, such as high electrical conductivity combined with a low overall weight (density), which is for example relevant when such materials are dispersed within a polymeric binder-matrix, such as various thermoplastic, thermoset, and elastomer polymeric materials or mixtures or copolymers thereof.

## Summary of the Invention

The present inventors have surprisingly found that synthetic graphite particulate materials as defined in the appended claims have excellent properties enabling the formation of composite materials with an unexpected and advantageous combination of low density and good electrical conductivity.

Moreover, it was surprisingly discovered that such advantageous synthetic graphite particulate materials can be conveniently obtained from renewable feedstocks, thereby greatly improving the environmental sustainability of the materials claimed in the present invention.

In a first aspect, the present invention discloses a synthetic graphite particulate material which is characterized by a xylene density of at least about 2.11 g/cm3, a spring-back value of at least about 25%, and a Scott density of below about 0.20 g/cm3. Non-limiting examples of further parameters that may also additionally define the inventive synthetic graphite particulate material may be its Brunauer-Emmett-Teller specific surface area (henceforth referred to as "BET SSA"), its particle size distribution (expressed as D10, D50, and D90 values), and its crystalline properties (e.g. its crystallographic Lc and/or c/2 values, and/or crystallite size $L_a$). Furthermore, the synthetic graphite particulate material can be obtained from renewable feedstocks such as, e.g., a biochar.

Also, the invention in a second aspect relates to a mixture of the inventive synthetic graphite particulate material with a polymeric material, which is optionally selected from the group consisting of thermoplastic, thermoset, and elastomer polymers, or mixtures or copolymers thereof.

Additionally, the invention, in a third aspect, relates to composite materials comprising the inventive synthetic graphite particulate material embedded in a polymeric material, which is characterized by an unexpected and favorable combination of physical properties. Such properties may include low density, in- and through-plane electrical resistivity, and low anisotropy of said volume resistivity, and optionally are a combination of low density and low electrical resistivity. The polymeric material may optionally be selected from the group consisting of thermoplastic, thermoset, and elastomer polymers, or mixtures or copolymers thereof.

A fourth aspect of the invention relates to promising applications of the inventive synthetic graphite particulate materials and or composite materials comprising them, such as, for example, their use in bipolar plates, in carbon brushes, or in alkali metal batteries such as Li-ion batteries.

Lastly, in a fifth aspect of the invention, the present disclosure includes a method of manufacturing the inventive synthetic graphite particulate materials using renewable feedstocks as starting materials, comprising loading a renewable feedstock into a container and heating it under exclusion of oxygen for about 1 to 7 days at a temperature in the range of about 2200 °C to 3000 °C and, after a cooling period of the synthetic graphite particulate material, grinding it to smaller particle sizes, optionally wherein the renewable feedstock is a biochar.

## Brief Description of the Drawings

The effects achieved by the present invention will be more readily appreciated when being considered in connection with the accompanying drawings in which:

Figure 1 depicts the in-plane electrical resistivity of phenolic resin composites comprising the synthetic graphite particulate materials according to the invention (IE1 to IE2b) and comparative graphite / graphite-like particulate materials (CE1 to CE8) as a function of their density.

Figure 2 shows the through-plane electrical resistivity of phenolic resin composites comprising the synthetic graphite particulate materials according to the invention (IE1 to IE2b) and comparative graphite / graphite-like particulate materials (CE1 to CE8) as a function of their density.

## Definitions

A "renewable feedstock" or "bio-material" refers to materials that are used as starting materials for (generally industrial) processes that can at the same time be replenished on a human timescale. Examples of renewable feedstocks in the sense of this invention include agricultural residues, agricultural waste, forestry byproducts (e.g. sawdust), forestry residues (such as wood chips), wood industry by-products and other types of biological waste products, lignin, biochars, and algae. These materials are sustainable carbon-source alternatives to fossil fuels, as they can be continuously regenerated through natural processes, thus reducing overall environmental impact. Renewable feedstocks as described herein offer a sustainable pathway for accessing promising graphite materials.

A "biochar" is a type of charcoal derived from the charification of biological matter. In other words, a biochar is a carbon-rich residue consisting of a variety of (mostly amorphous) solid materials derived from the pyrolysis of biomass under oxygen-limited conditions. Properties of biochars can be categorized in several respects, including the elemental composition, ash content, volatiles content, bulk density, pH value, and porosity. The atomic ratios of biochar, including H/C and O/C, correlate with the properties that are relevant to organic content, such as polarity and aromaticity.

The term "synthetic graphite particulate material" refers to fine particles (generally regarded as being < 1 mm in diameter) composed primarily of carbon that can be primarily $sp^3$ hybridized, $sp^2$ hybridized, amorphous, or a mixture thereof. Typical parameters used in the art to describe synthetic graphite particulate materials are *e.g.* BET SSA, Scott density, tapped density, spring-back %, xylene density, crystallographic parameters such as $L_c$, $c/2$ and crystallite size La, and their chemical composition. It is generally accepted in the art that a combination of all relevant parameters will ultimately determine the macroscopic physical properties of synthetic graphite particulate materials and/or composites derived therefrom.

A "composite material" in the sense used herein is a solid material comprising two or more constituent materials with significantly different physical or chemical properties compared to their individual constituents. These constituents are more or less homogeneously interspersed and distributed over the composite material, yet remain separate and distinct within it (e.g. *not* a solution or an alloy), resulting in a material with enhanced properties compared to the individual components. Common examples include carbon fiber reinforced polymers, bipolar plates, carbon brushes, and other materials such as reinforced concrete. Composite materials are designed to achieve specific performance characteristics not achievable with their individual constituents, such as increased strength, stiffness, durability, or thermal and/or electrical conductivity.

The term "thermoplastic polymer" generally refers to polymeric compositions that become pliable or moldable upon heating and (re-)solidify upon cooling. This process is reversible, allowing the material to be reshaped and/or recycled multiple times without significant chemical change. Thermoplastic polymers include, but are not limited to polyethylene, polystyrene, and polyvinyl chloride and are characterized by their ease of processing, recyclability, and wide range of applications in industries such as packaging, construction, and automotive manufacturing.

The term "thermoset polymer" generally refers to polymeric compositions that, once cured by heat and/or chemical means, become permanently hard and infusible and are often durable. Unlike thermoplastic polymers, thermoset polymers do not soften upon reheating due to internal cross-linking of polymer chains, which provides high thermal stability, chemical resistance, and structural integrity. Common examples for thermoset polymers include epoxy, phenolic, and polyester resins. Thermoset polymers are widely used in applications requiring durable, heat-resistant, and non-elastic materials, such as electronics, adhesives, and coatings.

The term "elastomer" generally refers to polymeric compositions with viscoelasticity, meaning that elastomers exhibit both viscosity and elasticity, allowing it to stretch significantly under stress and return to its original shape once the stress is removed, provided a critical strain has not been exceeded. Elastomers have a low Young's modulus and high failure strain, providing flexibility and resilience. Common examples include polybutadiene polymers (*e.g.* natural and synthetic rubbers), silicones, and polyurethanes. Elastomers are widely used in applications such as seals, gaskets, insulating materials, and flexible hoses due to their durability and elastic properties.

A "phenolic resin" is a synthetic thermoset polymer produced by the reaction of phenol with formaldehyde. It is known for its high mechanical strength, thermal stability, and chemical resistance. Phenolic resins are commonly used in applications requiring durable, heat-resistant materials, such as composite materials, molded parts, laminates, adhesives, and coatings. Their excellent properties also make them ideal for electrical and automotive components.

To "reticulate" refers to the formation of a network-like structure in a polymeric material, especially a resin such as a phenolic resin. Reticulation of a resin is generally achieved in the art by applying heat to a polymeric mixture comprising a cross-linker. Cross-linking individual polymeric "strands" enhances the structural integrity and mechanical properties of the composite comprising the resin, with its degree generally affecting the material's strength, rigidity, and durability.

**Detailed Description**

In the following, the invention will be explained in more detail, with reference to the accompanying figures where applicable.

Synthetic graphite particulate materials according to the invention

As mentioned above, synthetic graphite particulate materials can be described *inter alia* by their BET SSA, Scott density, tapped density, spring-back %, xylene density, crystallographic parameters, and their chemical composition. It is generally accepted in the art that these parameters are all at least partially interconnected and can have a distinct influence on the behavior of the synthetic graphite particulate materials and the macroscopic properties of composite materials comprising such particulate materials.

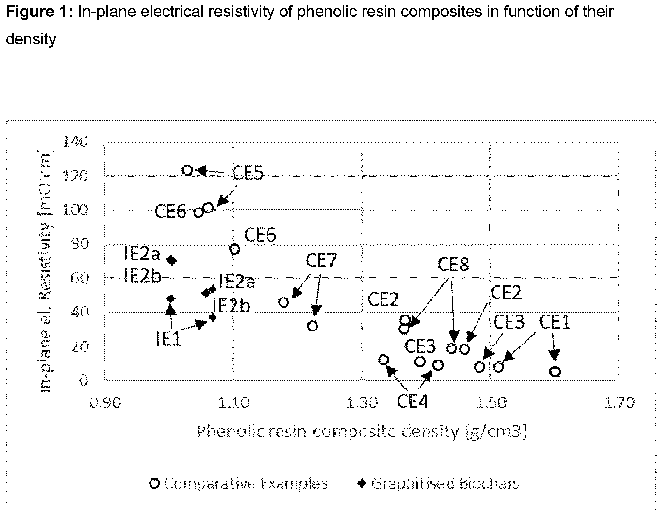

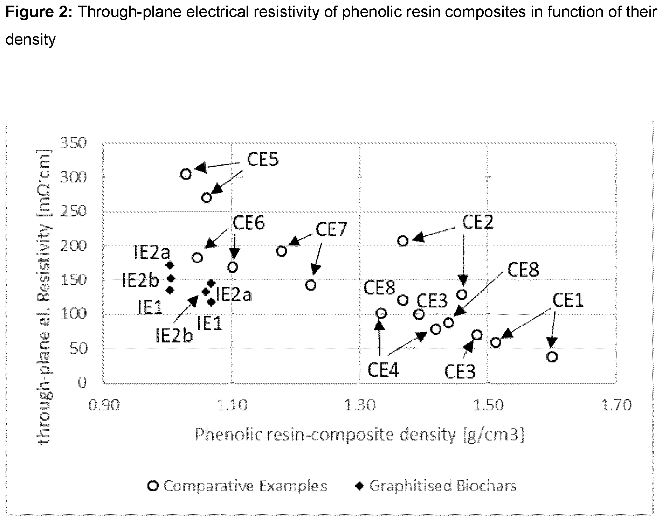

The current inventors have surprisingly found that synthetic graphite particulate materials characterized by a combination of xylene density, Scott density, and spring-back % allow the production of polymer composite materials with a unique and desirable/ advantageous combination of low composite material density (i.e. light-weight yet stable composite materials), low volume resistivity, and low anisotropy of volume resistivity, especially when compared to composite materials comprising commercially available graphite materials, as demonstrated by the data shown in Figures 1 and 2.

As such, in its first aspect, the invention relates to synthetic graphite particulate materials characterized by a combination of a xylene density of at least about 2.11 g/cm$^3$, a spring-back value of at least about 25%, and a Scott density of below about 0.20 g/cm$^3$ to achieve the advantageous technical effects reported herein.

Xylene density refers to the mass of xylene per unit volume of synthetic graphite particulate materials that is measured following principle of liquid exclusion as defined in DIN 51 901. This parameter allows the skilled person to draw certain conclusions to some degree about *inter alia* the 3-D internal structure and degree of graphitization of the synthetic graphite particulate material. While the inventive materials are generally required to display an xylene density of at least about 2.11 g/cm$^3$, in some embodiments of the invention the synthetic graphite particulate materials may also be characterized by a xylene density of at least about 2.117 g/cm$^3$, at least about 2.15 g/cm$^3$, or at least about 2.19 g/cm$^3$.

The spring-back value refers to the tendency of these synthetic graphite particulate materials to revert to their original volume or shape after being compressed. Hence, this parameter provides information about the resilience of the internal 3-dimensional structures of the synthetic graphite particulate materials to compression, with a higher percentage value indicating higher resilience to compression and generally higher tendency retain their porosity and surface area. The inventive materials are characterized by a spring-back value of at least 25%. In some embodiments, however, the synthetic graphite particulate materials of the invention may also be characterized by a spring-back value of at least about 26%, at least about 27%, at least about 28%, at least about 29%, or at least about 30%.

The Scott density (also referred to as bulk or apparent density) refers to a measure of compactness of synthetic graphite particulate materials. This parameter allows one to draw certain conclusions on the physical structure of synthetic graphite particulate materials, which influences their mechanical properties and overall performance. The synthetic graphite particulate materials according to the present invention are typically characterized by a Scott density of below about 0.20 g/cm$^3$. In certain embodiments of the invention, the materials may be defined by a Scott density of below about 0.19 g/cm$^3$, or below about 0.18 g/cm$^3$, or below about 0.17 g/cm$^3$.

The synthetic graphite particulate materials of the invention can further be defined by their respective Brunauer-Emmett-Teller specific surface area (BET SSA). The BET SSA refers to the total surface area per unit mass of the material. It quantifies how much surface area is available for interactions with other substances (such as gas molecules). In certain embodiments, the inventive materials may be defined by a BET SSA in the ranges from about 2 m$^2$/g to about 30 m$^2$/g, about 3 m$^2$/g to about 25 m$^2$/g, about 4 m$^2$/g to about 20 m$^2$/g, about 5 m$^2$/g to about 16 m$^2$/g about 6 m$^2$/g to about 14 m$^2$/g, or from about 7 m$^2$/g to about 13 m$^2$/g.

Additionally or alternatively, the synthetic graphite particulate materials according to the invention may further be characterized by their particle size distributions. Particle size distribution is typically described by the three parameters $D_{10}$, $D_{50}$, $D_{90}$, which describe the particle size of which 10%, 50%, or 90% (by volume) of the particle population, respectively, has a size below said value. The particle size population of a synthetic graphite particulate material can be altered by certain processes such as grinding. The synthetic graphite particulate materials according to the invention may in some embodiments be defined by a $D_{50}$ below about 500 μm, or below about 400 μm, or below about 300 μm, or below about 250 μm, or below about 200 μm, or below about 150 μm, or below about 100 μm, or below about 50 μm, or below about 40 μm, or below about 20 μm, or below about 10 μm and/or by a $D_{90}$ value of below about 1000 μm, or below about 800 μm, or below about 600 μm, or below about 500 μm, or below about 400 μm, or below about 300 μm, or below about 200 μm, or below about 100 μm, or below about 75 μm, or below about 60 μm, or below about 50 μm, or below about 45 μm, or below about 40 μm. As measured by vibrating sieving for synthetic graphite with d10 above 150 μm, otherwise for finer powders laser diffraction method according to ISO 13320 is applied using a Sympatec Helos.

The synthetic graphite particulate materials according to the invention may in some embodiments be defined by a tapped density at or below 0.31, or at or below 0.30.

Moreover, the inventive synthetic graphite particulate materials may further be characterized by their crystallographic parameters, such as their $L_c$ and crystallite size $L_a$ values. The crystallographic $L_c$ value describes the average size of the crystalline (graphitic) domains within the synthetic graphite particulate material, with increasing values pointing to bigger graphitic domains and a higher relative amount of carbon sp$^2$ hybridization (graphitization). Synthetic graphite particulate materials according to the present invention may in some embodiments be additionally or alternatively defined by a crystallographic $L_c$ value of at least about 25 nm, at least about 50 nm, at least about 75 nm, or at least about 100 nm and/or a crystallite size $L_a$ value of at least about 25nm, or at least about 30 nm or at least about 35 nm and/or an $L_c/L_a$ ratio below about 4 or below about 3.70 or below about 3.33. The closer the $L_c/L_a$ ratio is to 1, the more isotropic is the synthetic graphite particulate material.

A further crystallographic parameter which may describe the materials of the invention is the crystallographic c/2 value. The crystallographic c/2 value refers to half of the interlayer spacing (d-spacing) between adjacent graphene layers within the material's graphitic domains. In other words, it signifies the distance between the parallel planes of sp$^2$-carbon atoms in the crystalline lattice. Difference in c/2 value between various synthetic graphite particulate materials can occur for example due to intercalation and/or increased/decreased stacking interactions. In some embodiments, the inventive materials may further or alternatively be described with an c/2 value of less than or equal to about 0.3370 nm, less than or equal to about 0.3365 nm, less than or equal to about 0.3360 nm, or less than or equal to about 0.3359 nm.

It is to be understood that the advantageous technical effect observed with the inventive synthetic graphite particulate materials can be obtained by any particulate synthetic graphite particulate materials with the described properties, whether they are from a natural occurring source, synthetically produced by processes involving fossil fuel, or are obtained by processing renewable resources. However, in a preferred embodiment of the invention, the synthetic graphite particulate materials are obtainable by processing a renewable feedstock, thus achieving a sustainable pathway for accessing graphite or graphite-like particulate materials. "Obtainable by processing" means that starting from renewable feedstocks and using the processes of manufacturing described herein, the inventive synthetic graphite particulate materials can be obtained in a straightforward manner. Such renewable feedstock may either be a natural raw material, such as wood chips or dried algae, or be a pre-processed natural material such as a biochar, obtained by clarification processes of natural materials under oxygen-limited conditions. In some embodiments of the invention, the synthetic graphite particulate material is obtainable by further processing of a biochar material. In further embodiments, said biochar is obtainable from wood materials or byproducts of the lumber industry, such as saw dust or wood chips.

Properties of the synthetic graphite particulate materials of the invention in Composite Materials comprising them

As described above, the present inventors discovered synthetic graphite particulate materials (advantageously derived from renewable feedstock) that confer advantageous effects on the macroscopic properties of composite materials including such synthetic graphite materials. Macroscopic properties of a composite include, *inter alia*, its density, thermal and electrical volume resistivity, and the anisotropy thereof. As such, it will be understood that synthetic graphite particular materials of the invention can be compared with comparative synthetic graphite particular materials (i.e. not according to the present invention) in terms of their effect on composites (such as composite plates used, e.g., in bipolar plates employed in fuel cells) comprising such synthetic graphite particular materials. For a proper and reproducible determination of the effect of the synthetic graphite particulate materials on a composite material comprising it, the present invention describes and defines a single, normative composite plate composition that is well-suited for determining the effects of a given synthetic graphite particulate material on the macroscopic properties of the respective composite plate comprising said material. These normative composite plates can subsequently be used to compare the beneficial effects imparted to the composite plates with those achieved by other, comparative synthetic graphite particulate materials. To this end, a phenolic resin was chosen as polymeric material for comparative experiments, as it is a commonly used polymeric material in applications involving synthetic graphite particulate materials (such as the materials of the present invention), e.g. in bipolar plates as noted earlier herein, and phenolic resin is also commonly used also as binder in resin-bonded carbon brushes and in friction material composites for brake pads which are other potential applications of the synthetic graphite particulate materials of this invention.

The composition chosen for comparative experiments with the phenolic resin contains 80 wt% of synthetic graphite particulate material and 20 wt% of the phenolic resin, as this ratio appears to be practically relevant and well-suited to compare various synthetic graphite particulate materials for their effect on such composite plates.

It will be appreciated that the composite plates described herein will be mostly dominated by the properties of their constituent synthetic graphite particulate materials, hence allowing for a direct comparison between the synthetic graphite particulate materials based on the properties of their respective composite plates. As such, the properties observed for these (comparative) composite plates can be used to directly compare and distinguish the synthetic graphite particulate materials contained therein.

The composite plates for the comparative experiments described herein were prepared by mixing the solid components at room temperature, and subsequently pressing the composite plates at a pressure of 2 t/cm$^2$ and 4 t/cm$^2$, respectively, and reticulating the plates by a heat treatment process of between 25°C and 180°C as described more fully in Example 2 below. The particular phenolic resin used for composite plate comparisons described herein is commercially available under the name Supraplast 101/3040 (supplied by Süd-West Chemie GmbH), which is a phenolic resin with less than 20 wt% added hexamethylenetetramine and less than 1 wt% residual phenol.

In any event, it will be further appreciated that the effects on composites achieved by the inventive synthetic graphite particulate materials are of course not limited to the specific phenolic resin chosen by the inventors, or to the exact specific weight ratios used for making the respective composite plates. Rather, it is readily apparent that the advantageous effects will be achieved over a wide selection of polymeric materials such as thermoplastic, thermoset, or elastomer polymeric materials or mixtures or copolymers thereof, and over a wide range of ratios of inventive synthetic graphite particulate material to polymeric material/binder. Additionally, composite materials comprising the synthetic graphite particulate materials of the present invention and a polymeric material may contain additional additives, as commonly known in the art, such as carbon fibers, glass fibers for mechanical reinforcement, alumina trihydrate or other fire retardants.

As such, in certain embodiments the synthetic graphite particulate material according to the invention can be further characterized by allowing a composite plate density of below about 1.150 g/cm$^3$, below about 1.100 g/cm$^3$, below about 1.050 g/cm$^3$, or below about 1.010 g/cm$^3$ when pressed at 2 t/cm$^2$, or by allowing a composite plate density of below about 1.200 g/cm$^3$, below about 1.150 g/cm$^3$, or below about 1.075 g/cm$^3$ when pressed at 4 t/cm$^2$, when the synthetic graphite particulate material according to the invention is combined, pressed, and reticulated with a phenolic resin and wherein the resulting phenolic resin composite plate contains 80 wt% of the synthetic graphite particulate material and 20 wt% of a phenolic resin, and is pressed together at 2 t/cm$^2$ or at 4 t/cm$^2$, respectively.

It is generally known in the art that the electrical and/or thermal volume resistivity of composite materials comprising graphitic or graphite-like materials is not isotropic. In other words, a composite plate may have a varying electrical (volume) resistivity depending on whether it is measured in plane or through plane (i.e., perpendicular to the plate plane). Hence, in-plane and through-plane resistivity are parameters that describe the electrical volume resistance of composite materials or synthetic graphite particulate materials in different directions perpendicular to each other. In-plane resistivity measures the resistance to electrical current flow within the plane of the material, *e.g.* parallel to the graphene layers. Through-plane resistivity, on the other hand, measures the resistance to current flow perpendicular to these layers, through the material's thickness. Generally, a decrease in electrical volume resistivity indicates an increase in a materials conductivity and thereby its suitability for electrical applications.

Accordingly, in some embodiments of the invention the synthetic graphite particulate material can be further characterized by an in-plane resistivity of a reference composite plate as described above (i.e., when the synthetic graphite particulate material is combined, pressed, and reticulated with a phenolic resin and wherein the resulting phenolic resin composite plate contains 80 wt% of the synthetic graphite particulate material and 20 wt% of a phenolic resin, and is pressed together at 2 t/cm$^2$ or at 4 t/cm$^2$, respectively) of below about 90 mOhm*cm, below about 80 mOhm*cm, or below about 75 mOhm*cm when pressed at 2 t/cm$^2$, or by an in-plane resistivity of below about 70 mOhm*cm, below about 60 mOhm*cm, or below about 55 mOhm*cm when pressed at 4 t/cm$^2$.

Additionally or alternatively, in some embodiments of the invention the synthetic graphite particulate material can be further characterized by a through-plane resistivity of said reference composite plate of below about 180 mOhm*cm or below about 175 mOhm*cm when pressed at 2 t/cm$^2$, or by a through-plane resistivity of below about 170 mOhm*cm, below about 165 mOhm*cm, or below about 155 mOhm*cm when pressed at 4 t/cm$^2$.

As described above, composite plates comprising synthetic graphite particulate materials, especially graphitic or graphite-like particulate materials, will usually display anisotropy in electrical and/or thermal resistivity due to a preferred orientation of the graphite/graphite-like particles within the polymer matrix. Generally, anisotropy of electrical volume resistivity is a dimensionless value calculated by dividing the value of the through-plane resistivity by the value of the in-plane resistivity. For many applications envisioned for the inventive synthetic graphite particulate materials, a low anisotropy is desirable and generally considered favorable. The closer the anisotropy is to 1, the more isotropic is the composite plate.

Therefore, in certain embodiments the inventive synthetic graphite particulate material may additionally or alternatively be further characterized by a composite plate anisotropy of volume resistivity of said reference composite plate of below about 3.8, or below about 3.5, or below about 3.4, or below about 3.0 when pressed at 2 t/cm$^2$, or by a composite plate anisotropy of volume resistivity below about 4.4, below about 4.0, or below about 3.6 when pressed at 4 t/cm$^2$.

<u>Composite materials comprising the synthetic graphite particulate materials according to the invention and compositions including the synthetic graphite particulate materials according to the invention</u>

The present invention, in a third aspect, further relates to composite materials comprising the inventive synthetic graphite particulate material embedded in a polymeric material, which is characterized by an unexpected favorable combination of physical properties. As explained above, such properties may include low density (and thus weight), low in- and through-plane electrical (volume) resistivity, as well as low anisotropy of said electrical (volume) resistivity.

In this aspect, the polymeric material used for the composite materials may generally be any one material selected from the group consisting of thermoplastic, thermoset, or elastomer polymeric materials or mixtures or copolymers thereof. In certain embodiments, the polymeric material may be selected from the group consisting of polypropylene (PP), polyethylene (PE), polyamide (PA), polyphenyl sulfide (PPS), fluorinated ethylene propylene (FEP), or polyvinyldifluoride (PVDF), epoxy resins, phenolic resins, ethylene octene copolymer, and synthetic or natural rubbers. In some preferred embodiments of the invention, the polymeric material is a phenolic resin.

It will be understood that composite materials according to the invention may comprise any amount of synthetic graphite particulate material able to imbue the resulting material with desired / favorable electrical and/or thermal conductivity/electrical resistivity properties. At the same time composite materials according to the invention may comprise any amount of polymeric material as binder able to imbue the composite material with favorable mechanical properties such as durability and/or flexibility. Therefore, composite materials according to the invention may generally comprise between about 5 wt% to about 95 wt%, about 10 wt% to about 90 wt%, about 15 wt% to 85 wt%, or between about 20 wt% to 80 wt% of the inventive synthetic graphite particulate material and between about 5 wt% to about 95 wt%, about 10 wt% to about 90 wt%, about 15 wt% to 85 wt%, or between about 20 wt% to 80 wt% of the polymeric material.

It will be appreciated that the invention is not only directed at "finished" composite materials, but also includes compositions comprising a mixture of the inventive synthetic graphite particulate material and a mixture of polymerizable compounds, pre-polymers, or particles of a meltable or extrudable polymeric material. In other words, the present invention is in a further aspect also directed at compositions comprising the inventive synthetic graphite particulate materials prior to a polymerization, melt injection, extrusion, or comparable process step which are typically used in the art to obtain the respective composite materials. The chemical nature of the polymerizable compound, pre-polymer, or meltable or extrudable polymer mixture comprised within such compositions, and the ratios of said mixture to the inventive synthetic graphite particulate material is generally the same as these described for the composite materials above (*i.e.*, mixtures that can yield polymers as defined above).

<u>Downstream products and/or applications comprising the inventive synthetic graphite particulate materials</u>

Synthetic graphite particulate materials according to the invention, compositions comprising said particulate materials, and composite materials with the advantageous combination of properties described herein are immensely useful in all applications wherein low-weight, high conductivity (low resistivity) parts are generally considered desirable. Hence, products comprising the inventive synthetic graphite particulate materials are especially desirable where minimizing weight is an important parameter, such as, e.g., in automobile and aerospace applications. Moreover, in embodiments wherein the inventive synthetic graphite particulate material is derived from renewable feedstock, the invention provides a more sustainable alternative to other known / commercially available natural or synthetic graphites.

Accordingly, in a further aspect of the present invention, the synthetic graphite particulate materials are especially promising for their use in bipolar plates, for example for use in hydrogen fuel cells or electrical power storage. A further promising application is their use in carbon brushes for establishing an electrical contact between rotating and stationary parts, for example for use in electrical motors. Another promising use is their inclusion in alkali metal batteries, such as Li- or Na-Ion batteries. Further non-limiting applications for the inventive synthetic graphite particulate materials in which the sustainability aspect is of increased importance are, *e.g.*, frictional applications such as brake pads or as additive in lubricant compositions.

<u>Processes for manufacturing the synthetic graphite particulate materials according to the invention</u>

The inventive synthetic graphite particulate materials can generally be obtained using fossil fuel or renewable feedstocks. In preferred embodiments of the invention, the inventive synthetic graphite particulate materials are obtainable from renewable feedstocks.

As such, in a final aspect, the invention also relates to a method of manufacturing the synthetic graphite particulate materials of the present invention from renewable feedstocks, comprising loading the renewable feedstock into a container and heating it under exclusion of oxygen for about 1 to 7 days at a temperature in the range of about 2200 °C to 3000 °C and, after a cooling period of the synthetic graphite particulate material, grinding it to smaller particle sizes. In some embodiments, the renewable feedstock may be a biochar.

Renewable feedstocks according to the invention may, for example, include agricultural residues, forestry byproducts (*e.g.*, sawdust), biochars, and (dried) algae. In preferred embodiments of this aspect of the present invention, the synthetic graphite particulate materials are obtained by further processing of a biochar as described above. Such biochars may, for example, be produced by a pyrolysis step of natural products, such as, *e.g.*, sawdust.

In certain embodiments the container for the graphitization/heating step may be a sealed graphite box. Additionally or alternatively, the heating time may be from 2 to 5 days and the temperature may in some embodiments be in the range of 2600 °C to 2900 °C. The cooling period of the synthetic graphite particulate material may in certain embodiments be in the range of 10 to 12 days, although shorter or longer cooling periods are possible depending on the circumstances, such as the size of the container. Moreover, particle size after grinding the graphitized biochar (obtained after the heat-treatment) to the inventive synthetic graphite particulate material may be defined by a particle size distribution with a $D_{90}$ of typically below about 100 $\mu$m.

It will be obvious for a person skilled in the art that these embodiments and items only depict examples of a plurality of possibilities. Hence, the embodiments shown here should not be understood to confer any limitation of these features and configurations. Any possible combination and configuration of the described features can be chosen according to the scope of the invention.

**Measurement Methods**

Suitable methods for determining the various properties and parameters used to define the synthetic graphite particulate materials and compositions / downstream products comprising them, are set out in more detail below.

The percentage (%) values specified herein are by weight, unless specified otherwise.

Specific BET Solid Surface Area (BET SSA)

The method is based on the registration of the absorption isotherm of liquid nitrogen in the range p/po = 0.04-0.26, at 77 K. The nitrogen gas adsorption was performed on a Quantachrome Autosorb-1. Following the procedure proposed by Brunauer, Emmet and Teller (Adsorption of Gases in Multi-molecular Layers, J. Am. Chem. Soc., 1938, 60, 309-319), the monolayer capacity can be determined. On the basis of the cross-sectional area of the nitrogen molecule, the monolayer capacity and the weight of sample, the specific surface can then be calculated. The isotherm measured in the pressure range $p/p_0$ 0.01-1, at 77 K may be processed with DFT calculation in order to assess the pore size distribution, micro- and mesopore volume and area.

References: Ravikovitch, P., Vishnyakov, A., Russo, R., Neinark, A., Langmuir, 16, 2000, 2311-2320, Jagiello, J., Thommes, M., Carbon, 42, 2004, 1227-1232.

Particle Size Distribution (PSD) by Laser Diffraction

The presence of particles within a coherent light beam causes diffraction. The dimensions of the diffraction pattern are correlated with the particle size. A parallel beam from a low-power laser lights up a cell which contains the sample. The beam leaving the cell is focused by an optical system. The distribution of the light energy in the focal plane of the system is then analyzed. The electrical signals provided by the optical detectors are transformed into the particle size distribution by means of a calculator. The method yields the proportion of the total volume of particles to a discrete number of size classes forming a volumetric particle size distribution (PSD). The particle size distribution is typically defined by the values $D_{10}$, $D_{50}$ and $D_{90}$, wherein 10 percent (by volume) of the particle population has a size below the $D_{10}$ value, 50 percent (by volume) of the particle population has a size below the $D_{50}$ value and 90 percent (by volume) of the particle population has a size below the $D_{90}$ value.

The Particle Size Distribution (PSD) for products ranging up to 150 $\mu$m is measured by means of the LASER Diffraction according to ISO 13320 and using a Sympatec Helos dry system (without water). A laser beam lights up the measuring chamber in which the graphite sample is blown by means of compressed air, the generated diffraction pattern is collected by means of a Fourier optic system and interpreted using standard models of the light scattering theory, such as that developed by Mie. (see, e.g. Wriedt, T. (2012), Mie Theory: A Review. In: Hergert, W., Wriedt, T. (Eds.) The Mie Theory. Springer Series in Optical Sciences, vol 169. Springer, Berlin, Heidelberg. https://doi.org/10.1007/978-3-642-28738-1_2). The particle size distribution is calculated and reported in $\mu$m for the three quantiles: 10% ($D_{10}$), 50% ($D_{50}$) and 90% ($D_{90}$).

X-Ray Diffraction

XRD data were collected using a PANalytical X'Pert PRO diffractometer coupled with a PANalytical X'Celerator detector. The diffractometer has following characteristics shown in Table 1:

**Table 1: Instrument data and measurement parameters**

| | |
|---|---|
| Instrument | PANalytical X'Pert PRO |
| X-Ray detector | PANalytical X'Celerator |

(continued)

| X-ray source | Cu-K$_\alpha$ |
|---|---|
| Generator parameters | 45 kV - 40 mA |
| Scan speed | 0.07°/s |
| Divergence slit | 1° |
| Sample spinning | 60 rpm |

The data were analyzed using the PANalytical X' Pert HighScore Plus software.

Interlayer Spacing c/2

The interlayer spacing c/2 was determined by X-ray diffractometry. The angular position of the peak maximum of the [002] reflection profiles were determined and, by applying the Bragg equation, the interlayer spacing was calculated (Klug and Alexander, x-ray diffraction Procedures, John Wiley & Sons Inc., New York, London (1967)). To avoid problems due to the low absorption coefficient of carbon, the instrument alignment and non-planarity of the sample, an internal standard, silicon powder, was added to the sample and the graphite peak position was recalculated on the basis of the position of the silicon peak. The graphite sample was mixed with the silicon standard powder by adding a mixture of polyglycol and ethanol. The obtained slurry was subsequently applied on a glass plate by means of a blade with 150 $\mu$m spacing and dried.

Crystallite Size L$_c$

Crystallite size was determined by analysis of the [002] diffraction profile and determining the widths of the peak profiles at the half maximum. The broadening of the peak should be affected by crystallite size as proposed by Scherrer (P. Scherrer, Göttinger Nachrichten, 2, 98, 1918). However, the broadening is also affected by other factors such X-ray absorption, Lorentz polarization and the atomic scattering factor. Several methods have been proposed to take these effects into account by using an internal silicon standard and applying a correction function to the Scherrer equation. For the present disclosure, the method suggested by Iwashita (N. Iwashita, C. Rae Park, H. Fujimoto, M. Shiraishi and M. Inagaki, Carbon, 42, 2004, 701-714) was used. The sample preparation was the same as for the c/2 determination described above.

Crystallite Size L$_a$

Crystallite size La is calculated from Raman spectrocscopy measurements performed on Horiba Jobin Yvon LabRAM-ARAMIS Advanced Raman Microscope. Raman spectroscopy is a light scattering method. The IG/ID ratio ("R value") is based on the ratio of intensities of the so-called band D and band G. These peaks are measured at 1350 cm-1 and 1580 cm-1 respectively and are characteristic for carbon materials. Raman spectroscopy is a complementary method to XRD because it identifies surface crystallinity because it is a surface sensitive method - penetration and detection depths are in the range of hundreds of nanometers depending on the laser wavelength. Crystallite size La is calculated based on the references from Tunistra et al and Cancado et al [F. Tuinstra and J. L. Koening, J. Chem. Phys. 53, 1126 (1970); D. S. Knight and W. B. White, J. Mater. Res. 4, 385 (1989). Y. Ward et al, J. Mater. Sci. (2007) 42: 5135-5141] where average crystallinity in the a direction (La) can be calculated based on the intensities ratios and area ratios, respectively, using equation:

$$\text{La Angstrom Å} = C \times I_G/I_D$$

where constant C has value of 58[A] for laser with wavelength of 632.8 nm.

Xylene Density

The analysis is based on the principle of liquid exclusion as defined in DIN 51 901. Approx. 2.5 g (accuracy 0.1 mg) of powder was weighed in a 25 ml pycnometer. Xylene was added under vacuum (15 Torr). After a few hours dwell time under normal pressure, the pycnometer was conditioned and weighed. The density represents the ratio of mass and volume. The mass is given by the weight of the sample and the volume is calculated from the difference in weight of the xylene filled pycnometer with and without sample powder.

Reference: DIN 51 901

Scott Density (Apparent Density or Bulk Density)

The Scott density is determined by passing the dry carbon powder through the Scott volumeter according to ASTM B 329-98 (2003). The powder is collected in a 1 in 3 vessel (corresponding to 16.39 cm$^3$) and weighed to 0.1 mg accuracy. The ratio of weight and volume corresponds to the Scott density. It is necessary to measure three times and calculate the average value. The bulk density of graphite or graphite-like material is calculated from the weight of a 250 ml sample in a calibrated glass cylinder.

Reference: ASTM B 329-98 (2003)

Tapped Density

100 g of dry graphite powder was carefully poured into a graduated cylinder. Subsequently, the cylinder was fixed on the off-center shaft-based tapping machine and 400 strokes were run. The reading of the volume was taken and the resulting density calculated.

Reference: DIN-ISO 787-11

Spring-back Value

The spring-back is a source of information regarding the resilience of compacted graphite powders. A defined amount of powder was poured into a die of 20 mm diameter. After inserting the punch and sealing the die, air was evacuated from the die. Compression force of 1.5 metric tons was applied resulting in a pressure of 0.477 t/cm$^2$ and the powder height was recorded. This height was recorded again after pressure had been released. Spring-back is the height difference in percent relative to the height under pressure.

Ash Content

A low-walled ceramic crucible is heated to 810°C in a muffle furnace and cooled to room temperature in a desiccator. A sample of 10 g of dry powder (accuracy 0.1 mg) is weighed in the calcined crucible.
The powder is combusted in the presence of oxygen at a temperature of 810°C (at least 8 h) until a constant weight is reached. The residual corresponds to the ash content and is reported as a percentage of the initial weight of the sample.

Reference: DIN 51903 Testing of synthetic graphite materials - Determination of ash value - Solid materials

Volatile Content

A suitable amount, about 2 g, of pre-dried (120°C for 8 hours) sample is weighed in a quartz crucible closed with its proper lid. The crucible is then placed inside a muffle furnace preheated at a temperature of $900 \pm 5$°C for 7 minutes ($\pm 5$ seconds). The crucible is removed from the muffle furnace and left (with the lid on it) for cooling at ambient temperature. The loss of weight of the sample is determined and expressed as a percentage of the initial weight of the sample.

Reference: ISO 562 Hard coal and coke - Determination of volatile matter

Vibrating Sieve - Particle size distribution by soft vibration sieving

In general, a set of circular sieves with descending mesh size are assembled and fixed on a vibration machine. 100 g of dry powder is poured onto the top (= lowest mesh No.) screen. The set is vibrated for a certain time and the residue on the screens and in the bottom pan is weighed and particle size distribution is calculated. For the determination of the particle size of the present invention by soft vibration sieving, an analytical sieve shaker Retsch© AS200 was used. The settings were 1.0 of amplitude, duration 7 min, a break (called interval) every 13 seconds.

References: DIN 51938

**Polymer Composition (Composite) Measurements**

Composite Plate Density

Composite plate density is determined by measuring the weight and volume of the composite plate samples containing a polymer and a graphite particulate material, and dividing the weight of the sample by the volume of sample, whereas the volume is calculated by multiplying the length, width and thickness of the sample, which are measured using a micrometer, such as Tesa $\mu$-HITE.

Electrical Volume Resistivity (VR)

Electrical volume resistivity was measured using the 4-points contact method according to ISO 3915.

In-plane VR

Silver paint (normally ethyl acetate-based) is evenly applied to both ends of the specimen. When the paint is dried, crocodile clamps are applied to the part with silver paint to apply an electric current using Schuetz MR1012S. Two wedge-shaped electrodes (distance between the tips of the wedges: 20 mm) are positioned in the middle to measure the voltage drop using Schuetz MR1012S.

The electrical resistivity is calculated according to the formula:

$$\rho = R*(H*W)/L$$

where $\rho$ is the resistivity in $\Omega*$cm, R is the resistance in $\Omega$, L is the distance between electrodes, H is the thickness of the specimen and W is the width of the specimen.

Through-plane VR

The configuration used for this measurement is a planar stack composed of 2 metal plates as current electrodes, 2 sheets of graphite (intermediate layer of contact), the sample sandwiched between the graphite sheets, and 2 thin gold wires (diameter = 0.125 mm) as measuring electrodes positioned between the sample and the graphite foils. A pressure of 3 N/mm$^2$ is applied to the stack to reduce contact resistances through a press.

Electrical resistance is measured using Schuetz MR1012S and electrical resistivity is calculated according to the formula

$$\rho = R*(L*W)/t$$

where $\rho$ is the resistivity in $\Omega*$cm, R is the resistance in Ohms, t is the thickness of the sample, L is the length of the specimen and W is the width of the specimen.

Anisotropy of VR

The anisotropy of the electrical volume resistance is calculated according to the following formula:

$$Anisotropy\ (VR) = \frac{Through - plane\ VR}{In - plane\ VR}$$

Accordingly, the anisotropy of a sample is unit-less.

**Examples**

Example 1

Different bio-materials were tested for graphitization, their main properties are listed in Table 1. Bio-material 1 is a biochar produced from pyrolysis of sawdust (wood chips sieving residue) and Bio-material 2 is a biochar produced from pyrolysis of pine sawdust.

**Table 1:** Bio-material properties

| | Bio-material | Ash [Wt. %] | Volatile [Wt. %] | bulk density y [g/cm$^3$ ] | Vibrating sieving [%] | | | | | | |
| --- | --- | --- | --- | --- | --- | --- | --- | --- | --- | --- | --- |
| | | | | | >5 (mm) | >3.15 (mm) | >2 (mm) | >1 (mm) | >500 (μm) | >250 (μm) | >150 (μm) |
| Bio-material 0 | Charcoal | 1.7 | 10.3 | 0.15 | 0.0 | 0.0 | 0.0 | 0.0 | 10.6 | 56.8 | 98.9 |
| Bio-material 1 | Biochar | 8.0 | 18.1 | 0.13 | 5.5 | 22.7 | 39.7 | 60.0 | 75.5 | 89.0 | 96.3 |
| Bio-material 2 | Biochar | 12.3 | 7.3 | 0.09 | 0.5 | 1.5 | 4.3 | 18.0 | 44.9 | 75.5 | 87.2 |
| Bio-material 3 | Ammonium lig-nins ulfonate | 0.8 | 60.7 | 0.54 | 0 | 0 | 0 | 0 | 0 | 0 | 0.1 |

For each of Bio-materials 1 to 3, quantities ranging from 1 to 4 kg of the bio-material was loaded into graphite boxes and then graphitized in an Acheson furnace for 2 to 5 days under exclusion of oxygen at conditions expected to result in temperatures exceeding about 2800°C [Jäger, Frohs, Industrial Carbon and Graphite Materials Vol 1, Ch 6.2.5., p. 223], and were then cooled for from 10 to 12 days. The graphite boxes used had a volume of 8.5 L, and the amount of material was added to be nearly full, usually 80 or 90 % The obtained raw graphites were further ground to typical particle sizes for synthetic graphite particulate materials (inventive examples: IE1, IE2a, and IE2b see Table 2) in order to be further processed in polymer composites.

The properties of the ground graphitized Bio-materials are summarized in Table 2, as are the properties of certain typical standard synthetic graphites used in bipolar plate and/or carbon brush applications. The following comparative examples (CE1 to CE3) are each commercially available synthetic graphites and are all available from Imerys Graphite and Carbon, and are already used for bipolar plates and/or carbon brushes, having optimized properties for these applications:

TIMREX® KS 75 graphite (Comparative Example 1, CE1),

TIMREX ® KS 5-75TT (Comparative Example 2, CE2),

TIMREX ® T 75 (Comparative Example 3, CE3).

Comparative Example 4 (CE4) was obtained through graphitization of anthracite (a non-renewable feedstock). The anthracite was loaded into a graphite box and then graphitized in an Acheson furnace for 2 to 5 days at conditions expected to result in temperatures exceeding 2800°C; and were then cooled for from 10 to 12 days. The obtained raw graphite was further ground to typical particle sizes (see Table 2) in order to be further processed in polymer composites.

Comparative Example 5 (CE5) was obtained by graphitization of Bio-material 0 (charcoal). The charcoal was loaded into a graphite box and then graphitized in an Acheson furnace for 2 to 5 days at conditions expected to result in temperatures exceeding 2800°C; and were then cooled for from 10 to 12 days. The obtained raw graphite was further ground to typical particle sizes (see Table 2) in order to be further processed in polymer composites. The particle sizes for the charcoal bio-material used in producing CE5 differ in their particle size distribution compared to the other Bio-materials (see Table 1).

Comparative Examples 6-8 (CE6 to CE8) were obtained by graphitization of mixtures between petroleum cokes (sponge type, which is a non-renewable feedstock) and Bio-materials 1, 2 and 3 (1:1). For each of CE6 to CE8, the petroleum coke/bio-material mixture was loaded into a graphite box and then graphitized in an Acheson furnace for 2 to 5 days at conditions expected to result in temperatures exceeding 2800°C; and were then cooled for from 10 to 12 days. The obtained raw graphite was further ground to typical particle sizes (see Table 2) in order to be further processed in polymer composites.

**Table 2A:** Graphitized Bio-material properties compared with other synthetic graphites

| Synthetic Graphite Sample | Xylene Density [g/cm³] | Scott Density [g/cm³] | Tapped Density [g/cm³] | Spring-back [%] | BET [m²/g] | Particle Size Distribution [μm] | | |
|---|---|---|---|---|---|---|---|---|
| | | | | | | d10 | d50 | d90 |
| CE1 TIMREX® KS 75 | 2.238 | 0.24 | | 18 | 6.1 | 5.4 | 24.7 | 72.4 |
| CE2 TIMREX® KS 5-75TT | 2.248 | 0.45 | 0.73 | 29 | 4.0 | 20.3 | 44.1 | 88.5 |
| CE3 TIMREX T 75 | 2.253 | 0.22 | | 22 | 8.6 | 5.6 | 25.7 | 69.6 |
| CE4 Graphitized coal | 2.108 | 0.15 | 0.32 | 31 | 10.5 | 5.2 | 18.8 | 43.6 |
| CE5 Graphitized Bio-material 0 (graph. charcoal) | 2.065 | 0.14 | | 42 | 6.7 | 2.9 | 14.5 | 76.8 |
| CE6 Graphitized pet. Coke and Bio-material 2 | 2.138 | 0.25 | | 35 | 9.4 | 5.6 | 19.6 | 58.5 |
| CE7 Graphitized pet. Coke and Bio-material 1 | 2.196 | 0.23 | 0.44 | 35 | 6.6 | 3.9 | 20.4 | 72.8 |
| CE8 Graphitized pet. Coke and Bio-material 3 | 2.126 | 0.29 | 0.57 | 22 | 5.5 | 4.4 | 22.4 | 75.4 |
| IE1 Graphitized Bio-material 1 | 2.117 | 0.15 | | 37 | 7.6 | 2.9 | 12.9 | 36.6 |
| IE2a Graphitized Bio-material 2 | 2.111 | 0.16 | 0.30 | 38 | 9.2 | 4.2 | 14.4 | 37.1 |
| IE2b Graphitized Bio-material 2 | 2.205 | 0.13 | | 29 | 12.8 | 3.3 | 9.2 | 21.0 |

**Table 2B**: Graphitized Bio-material properties compared with other synthetic graphites

| Synthetic Graphite Sample | $L_c$ (002) [nm] | $L_a$ Raman [nm] | $L_c/L_a$ | c/2 (002) [nm] |
|---|---|---|---|---|
| CE1 TIMREX® KS 75 | 160 | | | 0.3357 |
| CE2 TIMREX® KS 5-75TT | 170 | | | 0.3358 |
| CE3 TIMREX T 75 | 167 | | | 0.3358 |
| CE4 Graphitized coal | 105 | 23.6 | 4.44 | 0.3359 |
| CE5 Graphitized Bio-material 0 (graph. charcoal) | 100 | | | 0.3359 |
| CE6 Graphitized pet. Coke and Bio-material 2 | 97 | | | 0.3360 |
| CE7 Graphitized pet. Coke and Bio-material 1 | 110 | | | 0.3360 |
| CE8 Graphitized pet. Coke and Bio-material 3 | 109 | | | 0.3359 |
| IE1 Graphitized Bio-material 1 | 101 | | | 0.3359 |
| IE2a Graphitized Bio-material 2 | 111 | 37.0 | 3 | 0.3358 |
| IE2b Graphitized Bio-material 2 | 91 | | | 0.3359 |

**Example 2**

Phenolic resin composites were obtained by mixing the synthetic graphites of Table 2 with a phenolic resin. The respective synthetic graphite (80 wt.%) was mixed with a phenolic resin (Supraplast 101/3040 from Süd-West Chemie GmbH, 20 wt.%) at about 20°C by a Stuart roller mixer using steel balls (model number SRT9D) for 30 min at 60 rpm to form polymer/graphite mixtures. For each of the polymer/graphite mixtures, a 5 gram quantity of the prepared polymer/graphite mixture was pressed at room temperature with two different pressures (2 t/cm² and 4 t/cm², respectively) in a press, model number PW 40 EH-PRESSYS by Paul-Otto Weber GmbH, having a die of 50x12 mm² to form green plates with thickness of about 5 mm. The green plates were further reticulated by heating for the following ramped times and temperatures to obtain the final phenolic resin composites:

ramped from a temperature of 25°C to 80°C over a period of 120 minutes; then

ramped from a temperature of 80°C to 135°C over a period of 660 minutes; then

ramped from a temperature of 135°C to 180°C over a period of 270 minutes; then

kept at 180°C for 120 minutes; then

followed by cooling to room temperature over a period of 120 minutes.

Table 3 summarizes electrical volume resistivity data for the phenolic resin composites comprising the eleven graphite materials (both in-plane and through-plane). In contrast, the anisotropy of the electrical volume resistivity (VR) was calculated as through-plane VR divided by the in-plane VR.
The measured properties of the phenolic resin composites are summarized in Table 3.

**Table 3:** Phenolic resin composites electrical properties

| Synthetic Graphite | Phenolic resin composite pressed @2t/cm2 | | | | Phenolic resin composite pressed @)4t/cm2 | | | |
|---|---|---|---|---|---|---|---|---|
| | density [g/cm$^3$] | Volume Resistivity [mOhm·cm] | | | density [g/cm$^3$] | Volume Resistivity [mOhm·cm] | | |
| | | In-plane | Through-plane | anisotropy | | in-plane | through-plane | anisotropy |
| CE1 | 1.513 | 7.9 | 58.0 | 7.3 | 1.601 | 5.3 | 37.5 | 7.1 |
| CE2 | 1.368 | 35.6 | 206.5 | 5.8 | 1.460 | 18.2 | 128.5 | 7.1 |
| CE3 | 1.392 | 11.4 | 100.3 | 8.8 | 1.484 | 7.6 | 69.7 | 9.1 |
| CE4 | 1.334 | 12.3 | 101.1 | 8.2 | 1.419 | 9.0 | 78.1 | 8.7 |
| CE5 | 1.029 | 123.3 | 304.9 | 2.5 | 1.061 | 101.1 | 270.3 | 2.7 |
| CE6 | 1.046 | 98.5 | 182.9 | 1.9 | 1.102 | 77.3 | 168.5 | 2.2 |
| CE7 | 1.178 | 45.9 | 192.0 | 4.2 | 1.224 | 32.2 | 142.5 | 4.4 |
| CE8 | 1.367 | 30.7 | 120.1 | 3.9 | 1.440 | 19.0 | 88.0 | 4.6 |
| IE1 | 1.004 | 48.2 | 135.7 | 2.8 | 1.068 | 36.9 | 117.3 | 3.2 |
| IE2a | 1.004 | 71.3 | 171.4 | 2.4 | 1.068 | 53.4 | 145.8 | 2.7 |
| IE2b | 1.005 | 69.8 | 152.2 | 2.2 | 1.059 | 51.4 | 132.9 | 2.6 |

The unique electrical properties of these composite plates can be better recognized by looking at Figures 1 and 2, respectively. The phenolic resin composites including inventive graphites IE1, IE2a, and IE2b show lower electrical resistivities at comparable composite densities. While composite plates comprising CE5 and CE6 had a low density, each result in higher resistivity either because they have a real density that is too low (CE5) or an apparent density that is too high (CE6). Hence, only the inventive synthetic graphite particulate materials were able to form composite plates with a combination of low density and low resistivity (high conductivity). This feature allows manufacturing of bipolar plates and/or carbon brushes with significantly lower densities: in this case up to 20% lower densities are achieved at the same electrical resistivity.
Here below are listed one by one the different features (data in Tables 2 and 3, Figures 1 and 2) and the comparative examples relevant to:

Xylene Density

Comparative Example 5 differs from the inventive synthetic graphites by having a lower xylene density and a higher resistivity. Comparative Example 2 differs from the inventive synthetic graphites by having a higher xylene density resulting in higher composites densities.

Scott Density

Comparative Examples 6 and 7 differ from the inventive synthetic graphites by having a high apparent density leading to composites of higher resistivity at same density.

Spring-back and Scott Density

Comparative Examples 1 and 8 differ from the inventive synthetic graphites by their lower spring-back compared to the inventive synthetic graphites, and the very high densities of Comparative Examples 1 and 8.

Numbered paragraphs

**[0101]** For the avoidance of doubt, the present application is directed to the subject-matter described in the following numbered paragraphs:

1. A synthetic graphite particulate material, wherein the synthetic graphite particulate material is characterized by:

(i) a xylene density of at least about 2.11 $g/cm^3$;
(ii) a spring-back value of at least about 25%; and
(iii) a Scott density of below about 0.20 $g/cm^3$.

2. The synthetic graphite particulate material according to numbered paragraph 1,
wherein the spring-back value is at least about 26%, at least about 27%, or at least about 28%.

3. The synthetic graphite particulate material according to numbered paragraph 1 or numbered paragraph 2, wherein the xylene density is at least about 2.117 $g/cm^3$, at least about 2.15 $g/cm^3$, or at least about 2.19 $g/cm^3$.

4. The synthetic graphite particulate material according to any one of numbered paragraphs 1 to 3, wherein the Scott density is below about 0.19 $g/cm^3$, or below about 0.18 $g/cm^3$, or below about 0.17 $g/cm^3$.

5. The synthetic graphite particulate material according to any one of numbered paragraphs 1 to 4, further characterized by a BET specific surface area (BET SSA) from about 2 $m^2/g$ to about 30 $m^2/g$, about 3 $m^2/g$ to about 25 $m^2/g$, about 4 $m^2/g$ to about 20 $m^2/g$, about 5 $m^2/g$ to about 16 $m^2/g$ about 6 $m^2/g$ to about 14 $m^2/g$, or from about 7 $m^2/g$ to about 13 $m^2/g$.

6. The synthetic graphite particulate material according to any one of numbered paragraphs 1 to 5, further characterized by a particle size distribution (PSD) characterized by at least one of the following:

a $D_{50}$ below about 500 $\mu$m, or below about 400 $\mu$m, or below about 300 $\mu$m, or below about 250 $\mu$m, or below about 200 $\mu$m, or below about 150 $\mu$m, or below about 100 $\mu$m, or below about 50 $\mu$m, or below about 40 $\mu$m, or below about 20 $\mu$m, or below about 10 $\mu$m; and/or

a $D_{90}$ value of below about 1000 $\mu$m, or below about 800 $\mu$m, or below about 600 $\mu$m, or below about 500 $\mu$m, or below about 400 $\mu$m, or below about 300 $\mu$m, or below about 200 $\mu$m, or below about 100 $\mu$m, or below about 75 $\mu$m, or below about 60 $\mu$m, or below about 50 $\mu$m, or below about 45 $\mu$m, or below about 40 $\mu$m.

7. The synthetic graphite particulate material of any one of numbered paragraphs 1 to 6, further characterized by at least one of:

(i) a crystallographic $L_c$ value of at least about 25 nm, at least about 50 nm, at least about 75 nm, or at least about 100 nm; and/or
(ii) a crystallographic c/2 value of less than or equal to about 0.3370 nm, less than or equal to about 0.3365 nm, less than or equal to about 0.3360 nm, or less than or equal to about 0.3359 nm; and/or
(iii) a crystallite size $L_a$ value of at least about 25 nm, or at least about 30 nm or at least about 35 nm.

8. The synthetic graphite particulate material according to any one of numbered paragraphs 1 to 7, further characterized in that the synthetic graphite particulate material is obtainable by processing of a renewable feedstock, optionally wherein the synthetic graphite particulate material is obtainable by processing of a biochar, further optionally wherein the biochar is obtained from a wood material.

9. The synthetic graphite particulate material according to any one of numbered paragraphs 1 to 8, further characterized by a phenolic resin composite plate density of

(i) below about 1.150 g/cm$^3$, below about 1.100 g/cm$^3$, below about 1.050 g/cm$^3$, or below about 1.010 g/cm$^3$ when pressed at 2 t/cm$^2$; or
(ii) below about 1.200 g/cm$^3$, below about 1.150 g/cm$^3$, or below about 1.075 g/cm$^3$ when pressed at 4 t/cm$^2$;

when the synthetic graphite particulate material is mixed with a phenolic resin, and then pressed, and then ramped from a temperature of 25°C to 80°C over a period of 120 minutes; then ramped from a temperature of 80°C to 135°C over a period of 660 minutes; then ramped from a temperature of 135°C to 180°C over a period of 270 minutes; then kept at 180°C for 120 minutes; then followed by cooling to room temperature over a period of 120 minutes to form the phenolic resin composite plate, wherein the resulting phenolic resin composite plate contains 80 wt% of the synthetic graphite particulate material and 20 wt% of a phenolic resin, and is pressed together at 2 t/cm$^2$ or at 4 t/cm$^2$, respectively.

10. The synthetic graphite particulate material according to any one of numbered paragraphs 1 to 9, further characterized by a composite plate in-plane resistivity of

(i) below about 90 mOhm*cm, below about 80 mOhm*cm, or below about 75 mOhm*cm when pressed at 2 t/cm$^2$; or
(ii) below about 70 mOhm*cm, below about 60 mOhm*cm, or below about 55 mOhm*cm when pressed at 4 t/cm$^2$;

when the synthetic graphite particulate material is mixed with a phenolic resin, and then pressed, and then ramped from a temperature of 25°C to 80°C over a period of 120 minutes; then ramped from a temperature of 80°C to 135°C over a period of 660 minutes; then ramped from a temperature of 135°C to 180°C over a period of 270 minutes; then kept at 180°C for 120 minutes; then followed by cooling to room temperature over a period of 120 minutes to form the phenolic resin composite plate, wherein the resulting phenolic resin composite plate contains 80 wt% of the synthetic graphite particulate material and 20 wt% of a phenolic resin, and is pressed together at 2 t/cm$^2$ or at 4 t/cm$^2$, respectively.

11. The synthetic graphite particulate material according to any one of numbered paragraphs 1 to 10, further characterized by a composite plate through-plane resistivity of

(i) below about 180 mOhm*cm or below about 175 mOhm*cm when pressed at 2 t/cm$^2$; or
(ii) below about 165 mOhm*cm, below about 155 mOhm*cm, or below about 150 mOhm*cm when pressed at 4 t/cm$^2$;

when the synthetic graphite particulate material is mixed with a phenolic resin, and then pressed, and then ramped from a temperature of 25°C to 80°C over a period of 120 minutes; then ramped from a temperature of 80°C to 135°C over a period of 660 minutes; then ramped from a temperature of 135°C to 180°C over a period of 270 minutes; then kept at 180°C for 120 minutes; then followed by cooling to room temperature over a period of 120 minutes to form the phenolic resin composite plate, wherein the resulting phenolic resin composite plate contains 80 wt% of the synthetic graphite particulate material and 20 wt% of a phenolic resin, and is pressed together at 2 t/cm$^2$ or at 4 t/cm$^2$, respectively.

12. The synthetic graphite particulate material according to any one of numbered paragraphs 1 to 11, further characterized by a composite plate anisotropy of volume resistivity of

(i) below about 3.8, or below about 3.5, or below about 3.4, or below about 3.0 when pressed at 2 t/cm$^2$; or
(ii) below about 4.4, below about 4.0, or below about 3.6 when pressed at 4 t/cm$^2$;

when the synthetic graphite particulate material is mixed with a phenolic resin, and then pressed, and then ramped from a temperature of 25°C to 80°C over a period of 120 minutes; then ramped from a temperature of 80°C to 135°C over a period of 660 minutes; then ramped from a temperature of 135°C to 180°C over a period of 270 minutes; then kept at 180°C for 120 minutes; then followed by cooling to room temperature over a period of 120 minutes to form the phenolic resin composite plate, wherein the resulting phenolic resin composite plate contains 80 wt% of the synthetic graphite particulate material and 20 wt% of a phenolic resin, and is pressed together at 2 t/cm$^2$ or at 4 t/cm$^2$, respectively.

13. A composition comprising the synthetic graphite particulate material of any one of numbered paragraphs 1 to 12 and a particulate polymer, optionally wherein the polymer is selected from a thermoplastic polymer, a thermoset polymer, an elastomer or mixtures or copolymers of said polymers, further optionally wherein the polymer is selected from the group consisting of polypropylene (PP), polyphenyl sulfide (PPS), fluorinated ethylene propylene (FEP), or polyvinyldifluoride (PVDF), epoxy resins, phenolic resins, ethylene octene copolymer, synthetic or natural rubber, and even further optionally wherein the polymer is a phenolic resin.

14. A composite material comprising a synthetic graphite particulate material according to any one of numbered paragraphs 1 to 12 and a polymer, wherein the synthetic graphite particulate material is embedded within the polymer, optionally wherein the polymer is selected from a thermoplastic polymer, a thermoset polymer, an elastomer or mixtures or copolymers of said polymers, further optionally wherein the polymer is selected from the group consisting of polypropylene (PP), polyphenyl sulfide (PPS), fluorinated ethylene propylene (FEP), or polyvinyldifluoride (PVDF), epoxy resins, phenolic resins, ethylene octene copolymer, synthetic or natural rubber, and even further optionally wherein the polymer is a phenolic resin.

15. A bipolar plate comprising a particulate synthetic graphite material according to any one of numbered paragraphs 1 to 12, or a composite material according to numbered paragraph 14.

16. A carbon brush comprising a particulate synthetic graphite material according to any one of numbered paragraphs 1 to 12, or a composite material according to numbered paragraph 14.

17. A brake pad or a powder metallurgy component comprising a synthetic graphite particulate material according to any one of numbered paragraphs 1 to 8.

18. A Li-Ion battery or a fuel cell or a sodium-ion battery comprising a particulate synthetic graphite material according to any one of numbered paragraphs 1 to 12, or a composite material according to numbered paragraph 14, or a bipolar plate according to numbered paragraph 15.

19. A method of manufacturing the synthetic graphite particulate material of any one of numbered paragraphs 1 to 12, comprising loading a renewable feedstock into a container and heating it under exclusion of oxygen for about 1 to 7 days at a temperature in the range of about 2200 °C to 3000 °C and, after a cooling period of the synthetic graphite particulate material, grinding it to smaller particle sizes, optionally wherein the renewable feedstock is a biochar.

20. Use of a renewable feedstock to manufacture the carbonaceous particulate material of any one of numbered paragraphs 1 to 12, comprising loading the renewable feedstock into a container and heating it under exclusion of oxygen for about 1 to 7 days at a temperature in the range of about 2200 °C to 3000 °C and, after a cooling period of the carbonaceous particulate material, grinding it to smaller particle sizes, optionally wherein the renewable feedstock is a biochar.

**Claims**

1. A synthetic graphite particulate material, wherein the synthetic graphite particulate material is **characterized by**:

   (i) a xylene density of at least about 2.11 g/cm$^3$;
   (ii) a spring-back value of at least about 25%; and
   (iii) a Scott density of below about 0.20 g/cm$^3$.

2. The synthetic graphite particulate material according to claim 1, wherein the spring-back value is at least about 26%, at least about 27%, or at least about 28%.

3. The synthetic graphite particulate material according to claim 1 or claim 2, wherein the xylene density is at least about 2.117 g/cm$^3$, at least about 2.15 g/cm$^3$, or at least about 2.19 g/cm$^3$.

4. The synthetic graphite particulate material according to any one of claims 1 to 3,

wherein the Scott density is below about 0.19 g/cm$^3$, or below about 0.18 g/cm$^3$, or below about 0.17 g/cm$^3$.

5. The synthetic graphite particulate material according to any one of claims 1 to 4, further **characterized by** a BET specific surface area (BET SSA) from about 2 m$^2$/g to about 30 m$^2$/g, about 3 m$^2$/g to about 25 m$^2$/g, about 4 m$^2$/g to about 20 m$^2$/g, about 5 m$^2$/g to about 16 m$^2$/g about 6 m$^2$/g to about 14 m$^2$/g, or from about 7 m$^2$/g to about 13 m$^2$/g.

6. The synthetic graphite particulate material according to any one of claims 1 to 5, further **characterized by** a particle size distribution (PSD) **characterized by** at least one of the following:

   a $D_{50}$ below about 500 $\mu$m, or below about 400 $\mu$m, or below about 300 $\mu$m, or below about 250 $\mu$m, or below about 200 $\mu$m, or below about 150 $\mu$m, or below about 100 $\mu$m, or below about 50 $\mu$m, or below about 40 $\mu$m, or below about 20 $\mu$m, or below about 10 $\mu$m; and/or
   a $D_{90}$ value of below about 1000 $\mu$m, or below about 800 $\mu$m, or below about 600 $\mu$m, or below about 500 $\mu$m, or below about 400 $\mu$m, or below about 300 $\mu$m, or below about 200 $\mu$m, or below about 100 $\mu$m, or below about 75 $\mu$m, or below about 60 $\mu$m, or below about 50 $\mu$m, or below about 45 $\mu$m, or below about 40 $\mu$m.

7. The synthetic graphite particulate material of any one of claims 1 to 6, further **characterized by** at least one of:

   (i) a crystallographic $L_c$ value of at least about 25 nm, at least about 50 nm, at least about 75 nm, or at least about 100 nm; and/or
   (ii) a crystallographic c/2 value of less than or equal to about 0.3370 nm, less than or equal to about 0.3365 nm, less than or equal to about 0.3360 nm, or less than or equal to about 0.3359 nm; and/or
   (iii) a crystallite size La value of at least about 25nm, or at least about 30 nm or at least about 35 nm.

8. The synthetic graphite particulate material according to any one of claims 1 to 7, further **characterized in that** the synthetic graphite particulate material is obtainable by processing of a renewable feedstock, optionally wherein the synthetic graphite particulate material is obtainable by processing of a biochar, further optionally wherein the biochar is obtained from a wood material.

9. The synthetic graphite particulate material according to any one of claims 1 to 8, further **characterized by** a phenolic resin composite plate density of

   (i) below about 1.150 g/cm$^3$, below about 1.100 g/cm$^3$, below about 1.050 g/cm$^3$, or below about 1.010 g/cm$^3$ when pressed at 2 t/cm$^2$; or
   (ii) below about 1.200 g/cm$^3$, below about 1.150 g/cm$^3$, or below about 1.075 g/cm$^3$ when pressed at 4 t/cm$^2$;

   when the synthetic graphite particulate material is mixed with a phenolic resin, and then pressed, and then ramped from a temperature of 25°C to 80°C over a period of 120 minutes; then ramped from a temperature of 80°C to 135°C over a period of 660 minutes; then ramped from a temperature of 135°C to 180°C over a period of 270 minutes; then kept at 180°C for 120 minutes; then followed by cooling to room temperature over a period of 120 minutes to form the phenolic resin composite plate, wherein the resulting phenolic resin composite plate contains 80 wt% of the synthetic graphite particulate material and 20 wt% of a phenolic resin, and is pressed together at 2 t/cm$^2$ or at 4 t/cm$^2$, respectively.

10. The synthetic graphite particulate material according to any one of claims 1 to 9, further **characterized by** a composite plate in-plane resistivity of

   (i) below about 90 mOhm*cm, below about 80 mOhm*cm, or below about 75 mOhm*cm when pressed at 2 t/cm$^2$; or
   (ii) below about 70 mOhm*cm, below about 60 mOhm*cm, or below about 55 mOhm*cm when pressed at 4 t/cm$^2$;

   when the synthetic graphite particulate material is mixed with a phenolic resin, and then pressed, and then ramped from a temperature of 25°C to 80°C over a period of 120 minutes; then ramped from a temperature of 80°C to 135°C over a period of 660 minutes; then ramped from a temperature of 135°C to 180°C over a period of 270 minutes; then kept at 180°C for 120 minutes; then followed by cooling to room temperature over a period of 120 minutes to form the phenolic resin composite plate, wherein the resulting phenolic resin composite plate contains 80 wt% of the synthetic graphite particulate material and 20 wt% of a phenolic resin, and is pressed together at 2 t/cm$^2$ or at 4 t/cm$^2$, respectively.

11. The synthetic graphite particulate material according to any one of claims 1 to 10, further **characterized by** a composite plate through-plane resistivity of

(i) below about 180 mOhm*cm or below about 175 mOhm*cm when pressed at 2 t/cm$^2$; or
(ii) below about 165 mOhm*cm, below about 155 mOhm*cm, or below about 150 mOhm*cm when pressed at 4 t/cm$^2$;

when the synthetic graphite particulate material is mixed with a phenolic resin, and then pressed, and then ramped from a temperature of 25°C to 80°C over a period of 120 minutes; then ramped from a temperature of 80°C to 135°C over a period of 660 minutes; then ramped from a temperature of 135°C to 180°C over a period of 270 minutes; then kept at 180°C for 120 minutes; then followed by cooling to room temperature over a period of 120 minutes to form the phenolic resin composite plate, wherein the resulting phenolic resin composite plate contains 80 wt% of the synthetic graphite particulate material and 20 wt% of a phenolic resin, and is pressed together at 2 t/cm$^2$ or at 4 t/cm$^2$, respectively.

12. The synthetic graphite particulate material according to any one of claims 1 to 11, further **characterized by** a composite plate anisotropy of volume resistivity of

(i) below about 3.8, or below about 3.5, or below about 3.4, or below about 3.0 when pressed at 2 t/cm$^2$; or
(ii) below about 4.4, below about 4.0, or below about 3.6 when pressed at 4 t/cm$^2$;

when the synthetic graphite particulate material is mixed with a phenolic resin, and then pressed, and then ramped from a temperature of 25°C to 80°C over a period of 120 minutes; then ramped from a temperature of 80°C to 135°C over a period of 660 minutes; then ramped from a temperature of 135°C to 180°C over a period of 270 minutes; then kept at 180°C for 120 minutes; then followed by cooling to room temperature over a period of 120 minutes to form the phenolic resin composite plate, wherein the resulting phenolic resin composite plate contains 80 wt% of the synthetic graphite particulate material and 20 wt% of a phenolic resin, and is pressed together at 2 t/cm$^2$ or at 4 t/cm$^2$, respectively.

13. A bipolar plate comprising a particulate synthetic graphite material according to any one of claims 1 to 12.

14. A method of manufacturing the synthetic graphite particulate material of any one of claims 1 to 13, comprising loading a renewable feedstock into a container and heating it under exclusion of oxygen for about 1 to 7 days at a temperature in the range of about 2200 °C to 3000 °C and, after a cooling period of the synthetic graphite particulate material, grinding it to smaller particle sizes, optionally wherein the renewable feedstock is a biochar.

15. Use of a renewable feedstock to manufacture the carbonaceous particulate material of any one of claims 1 to 13, comprising loading the renewable feedstock into a container and heating it under exclusion of oxygen for about 1 to 7 days at a temperature in the range of about 2200 °C to 3000 °C and, after a cooling period of the carbonaceous particulate material, grinding it to smaller particle sizes, optionally wherein the renewable feedstock is a biochar.

**Figure 1:** In-plane electrical resistivity of phenolic resin composites in function of their density

**Figure 2:** Through-plane electrical resistivity of phenolic resin composites in function of their density

## EUROPEAN SEARCH REPORT

**Application Number**

EP 24 21 4904

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/207206 A1 (ULMANN PIRMIN [CH] ET AL) 4 July 2019 (2019-07-04) | 1-12 | INV.<br>C01B32/205 |
| Y | * paragraphs [0112], [0124] - [0129] *<br>* the whole document * | 13 | C01B32/21 |
| X | US 2019/237755 A1 (ULMANN PIRMIN [CH] ET AL) 1 August 2019 (2019-08-01) | 1-12 | |
| Y | * paragraphs [0185], [0199], [0200] *<br>* the whole document * | 13 | |
| X | WO 2024/039765 A2 (BIRLA CARBON U S A [US]) 22 February 2024 (2024-02-22)<br>* paragraphs [0005], [0018] - [0022]; claim 1 *<br>* the whole document * | 14,15 | |
| X | WO 2010/049428 A2 (TIMCAL SA [CH]; ROTA FABIO [CH] ET AL.) 6 May 2010 (2010-05-06)<br>* bridging paragraph;<br>page 4 - page 5 *<br>* the whole document * | 14,15 | |
| | | | TECHNICAL FIELDS SEARCHED (IPC) |
| Y | CN 109 818 004 A (UNIV HEFEI TECHNOLOGY) 28 May 2019 (2019-05-28)<br>* claims 1-3 *<br>* the whole document * | 13 | C01B<br>C08K |

The present search report has been drawn up for all claims

| Place of search | Date of completion of the search | Examiner |
|---|---|---|
| The Hague | 15 May 2025 | Straub, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT**

**ON EUROPEAN PATENT APPLICATION NO.**                   EP 24 21 4904

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2025

| Patent document cited in search report | | Publication date | Patent family member(s) | | Publication date |
|---|---|---|---|---|---|
| US 2019207206 | A1 | 04-07-2019 | CN | 109690838 A | 26-04-2019 |
| | | | EP | 3510657 A2 | 17-07-2019 |
| | | | JP | 2019530151 A | 17-10-2019 |
| | | | KR | 20190046968 A | 07-05-2019 |
| | | | US | 2019207206 A1 | 04-07-2019 |
| | | | WO | 2018046768 A2 | 15-03-2018 |
| US 2019237755 | A1 | 01-08-2019 | CN | 109690837 A | 26-04-2019 |
| | | | EP | 3510656 A1 | 17-07-2019 |
| | | | JP | 7021198 B2 | 16-02-2022 |
| | | | JP | 2019532469 A | 07-11-2019 |
| | | | KR | 20190049812 A | 09-05-2019 |
| | | | US | 2019237755 A1 | 01-08-2019 |
| | | | WO | 2018046767 A1 | 15-03-2018 |
| WO 2024039765 | A2 | 22-02-2024 | CN | 119894821 A | 25-04-2025 |
| | | | IL | 318964 A | 01-04-2025 |
| | | | WO | 2024039765 A2 | 22-02-2024 |
| WO 2010049428 | A2 | 06-05-2010 | CA | 2740860 A1 | 06-05-2010 |
| | | | CN | 102203007 A | 28-09-2011 |
| | | | CN | 104085885 A | 08-10-2014 |
| | | | DK | 2373580 T3 | 10-09-2018 |
| | | | EP | 2373580 A2 | 12-10-2011 |
| | | | ES | 2684295 T3 | 02-10-2018 |
| | | | HU | E039366 T2 | 28-12-2018 |
| | | | JP | 5802129 B2 | 28-10-2015 |
| | | | JP | 6151747 B2 | 21-06-2017 |
| | | | JP | 2012506835 A | 22-03-2012 |
| | | | JP | 2015212228 A | 26-11-2015 |
| | | | KR | 20110089411 A | 08-08-2011 |
| | | | PL | 2373580 T3 | 31-01-2019 |
| | | | US | 2011243832 A1 | 06-10-2011 |
| | | | WO | 2010049428 A2 | 06-05-2010 |
| CN 109818004 | A | 28-05-2019 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016130026 A1
- KR 20170117454

- WO 2024039765 A2

**Non-patent literature cited in the description**

- *Carbon*, May 2023, vol. 208, 443-451
- Activated Carbon. Elsevier Ltd, 2006, vol. 2006, 454-508
- **PIERSON, HUGH**. Handbook of carbon, graphite, diamond, and fullerenes : properties, processing, and applications. Noyes Publications, 1993
- **BANEK et al.** *Scientific Reports*, 2022, vol. 12, 8080
- **BANEK et al.** *ACS Sustainable Chem. Eng.*, 2018, vol. 6, 13199-13207
- **SHI et al.** *SusMat.*, 2023, vol. 3, 402-415
- **YAP**. *Materials*, 2023, vol. 16, 3601
- **JIANG et al.** *Carbon*, April 2019, vol. 144, 241-248
- **BRUNAUER** ; **EMMET** ; **TELLER**. Adsorption of Gases in Multi-molecular Layers. *J. Am. Chem. Soc.*, 1938, vol. 60, 309-319
- **RAVIKOVITCH, P.** ; **VISHNYAKOV, A.** ; **RUSSO, R.** ; **NEINARK, A.** *Langmuir*, 2000, vol. 16, 2311-2320

- **JAGIELLO, J.** ; **THOMMES, M.** *Carbon*, 2004, vol. 42, 1227-1232
- Mie Theory: A Review. **WRIEDT, T.** The Mie Theory. Springer Series in Optical Sciences. Springer, 2012, vol. 169
- **KLUG** ; **ALEXANDER**. x-ray diffraction Procedures. John Wiley & Sons Inc., 1967
- **P. SCHERRER**. *Göttinger Nachrichten*, 1918, vol. 2, 98
- **N. IWASHITA** ; **C. RAE PARK** ; **H. FUJIMOTO** ; **M. SHIRAISHI** ; **M. INAGAKI**. *Carbon*, 2004, vol. 42, 701-714
- **F. TUINSTRA** ; **J. L. KOENING**. *J. Chem. Phys.*, 1970, vol. 53, 1126
- **D. S. KNIGHT** ; **W. B. WHITE**. *J. Mater. Res.*, 1989, vol. 4, 385
- **Y. WARD et al.** *J. Mater. Sci.*, 2007, vol. 42, 5135-5141
- **JÄGER, FROHS**. Industrial Carbon and Graphite Materials, vol. 1, 223